(19) Europäisches Patentamt
European Patent Office
Office européen des brevets

(11) EP 0 604 229 B1

(12) **EUROPEAN PATENT SPECIFICATION**

(45) Date of publication and mention
of the grant of the patent:
**07.04.1999 Bulletin 1999/14**

(51) Int Cl.⁶: **G11B 15/467**

(21) Application number: **93310460.6**

(22) Date of filing: **23.12.1993**

(54) **Tracking control in image recorders and/or reproducers**

Spurnachführungssteuerung in Bildaufzeichnungs- und/oder wiedergabegeräte

Commande de suivi de piste dans un appareil d'enregistrement et/ou de reproduction d'images

(84) Designated Contracting States:
**DE FR GB**

(30) Priority: **23.12.1992 KR 9225219**
        **21.07.1993 KR 9313793**

(43) Date of publication of application:
**29.06.1994 Bulletin 1994/26**

(73) Proprietor: **Samsung Electronics Co., Ltd.**
**Suwon-city, Kyungki-do 441-370 (KR)**

(72) Inventor: **Kim, Jung-tae**
**Seoul (KR)**

(74) Representative: **Stanley, David William et al**
**APPLEYARD LEES**
**15 Clare Road**
**Halifax West Yorkshire HX1 2HY (GB)**

(56) References cited:
**US-A- 4 841 380        US-A- 4 875 115**

- **PATENT ABSTRACTS OF JAPAN vol. 14, no. 309 (P-1071) (4252) 4 July 1990 & JP-A-02 098 856 (MITSUBISHI) 11 April 1990**
- **PATENT ABSTRACTS OF JAPAN vol. 15, no. 251 (P-1220) (4779) 26 June 1991 & JP-A-03 080 458 (CANON INC) 5 April 1991**

## Description

The present invention relates to tracking control in image recorders and/or reproducers.

An image recorder and/or reproducer such as a video cassette recorder (VCR) or video camera (camcorder) creates a poor display by generating beats on a screen when tracking is not well-controlled. Therefore, good tracking control is essential to obtain a good display.

In a tracking control operation, a head is controlled correctly so as to scan a predetermined track, to thereby get a maximum envelope output during reproduction.

A separate control signal is used for tracking control. In a VHS-VCR, tracking is performed by using a control signal which is recorded on a control track of a tape by a fixed head. Further, in an 8mm VCR system, a pilot signal called an automatic track finding (ATF) signal having four kinds of different frequencies is recorded on a track of the tape, and then is used for reproduction in such a way that the tracking error, i.e. the degree of deviation from the track which the current head is scanning, is detected and reduced.

At this time, the detected tracking error can be minimized by controlling the spinning speed of the respective capstan motor. That is, the object of the tracking control is control of the spinning speed of capstan motor.

There now follows an example of a conventional tracking control method with reference to Figures 1 to 4 of the accompanying diagrammatic drawings, in which:

Figure 1A and Figure 1B show the relation of scanning traces of a head and tracking error of a VCR;

Figure 2 is a block diagram showing a capstan servo system for a conventional tracking control;

Figure 3 illustrates an example wherein the capstan servo system shown in Figure 2 is applied to a VHS-VCR; and

Figure 4 comparatively illustrates trackings in a normal track and in a modified track.

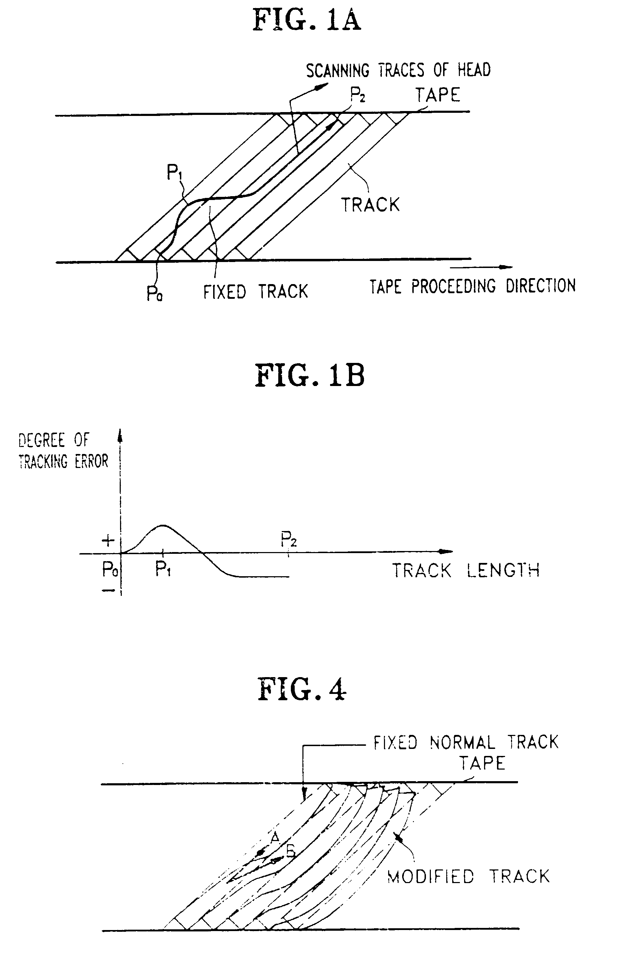

Figure 1A and Figure 1B show the relation between the scanning traces of the head and tracking error of a conventional VCR, wherein, for convenience, the generation of a positive error indicates that the head locates prior to the track to be scanned while the generation of a negative error indicates that the head locates after the track is scanned.

Following is the basic principle of tracking control. Referring to Figure 1, when the head is prior to the predetermined track, that is, when the head is located in a P1-level track, the tape proceeds slowly by slowing down the speed of the capstan motor. When the head is behind the predetermined track, that is, when the head is located in a P2-level track, the tape proceeds faster by increasing the speed of the capstan motor. Therefore, the head is controlled so as to scan the predetermined track correctly.

The basic principle of tracking control is still appropriate for embodiments of the present invention as well as for conventional methods.

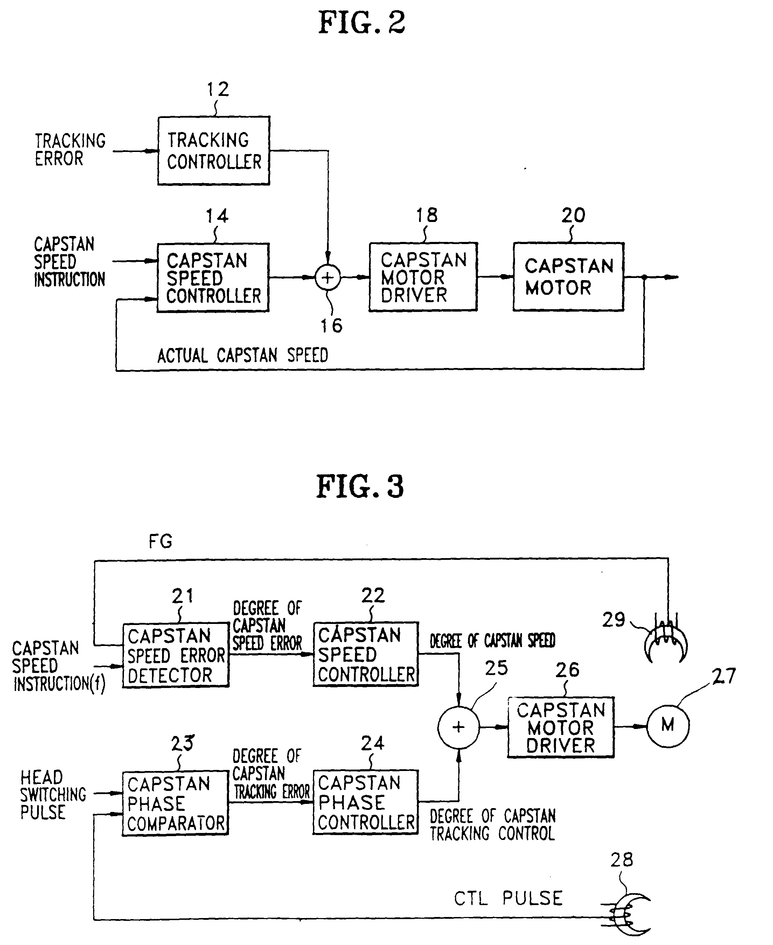

A conventional structure of capstan servo for tracking control is as shown in Figure 2.

Referring to Figure 2, a speed control signal for a capstan motor 20 is applied to a capstan motor driver 18 and is calculated from an amount of capstan speed control detected from a tracking controller 12 and an amount of tracking control detected from a capstan controller 14, respectively, the above two amounts being added by an adder 16.

Figure 3 shows an embodiment wherein the capstan servo system shown in Figure 2 is applied to a VHS-VCR.

Here, an amount of capstan speed control is calculated under the assumption that there is a predetermined normal track, and a capstan speed instruction (f), which corresponds to a regular spinning speed of the capstan motor which is needed when a head runs correctly in the above normal track, is a reference value. The reference value and the actual speed of the capstan motor 27 actually measured from a frequency generator 29 when capstan motor 27 spins, are compared in a capstan speed error detector 21. Then, the degree of error calculated from this comparison is changed into a degree of speed control of capstan motor 27 in a capstan speed controller 22, which is not related to the degree of tracking control for compensating the tracking error.

A record pulse which is synchronized with a track start point (hereinafter, termed a "control pulse") is recorded on a control track. Also, a degree of capstan tracking error is output from a capstan phase comparator 23 by means of phase comparison between the control pulse which is reproduced by a fixed head 28 (called a "control head") and a head switching pulse of which a pre-arranged frequency is provided. Then, the degree of capstan tracking error is multiplied by a predetermined gain coefficient or is differentiated or integrated so as to be output as a degree of capstan tracking control, i.e. a predetermined physical amount, in a capstan phase controller 24, thereby performing phase control of the capstan motor 27 in order to control tracking.

The degree of capstan speed control of capstan speed controller 22 and the degree of tracking control of capstan phase controller 24 are added in an adder 25, and the result is fed to a capstan motor driver 26 which drives the capstan motor 27.

However, the above-mentioned conventional method generates various kinds of problems when the direction for controlling the speed of capstan motor and the direction for controlling the tracking are different.

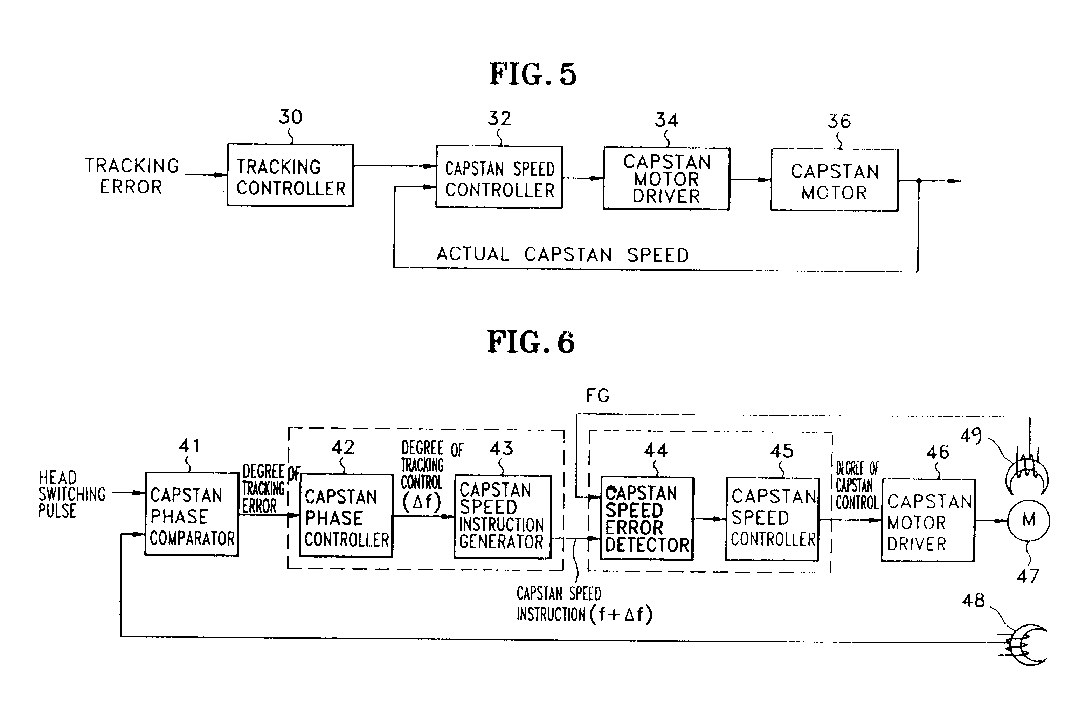

The following is an explanation with reference to Figure 2 and Figure 4.

Figure 4 shows the tracking when the head runs in a track which differs greatly from the normal track.

As can be seen in Figure 4, the trace of the head which capstan speed controller 14 aims to control is the predetermined normal track (the A direction of Figure 4), while the trace of the head which tracking controller 12 aims to control is the modified track(the B direction of Figure 4).

Accordingly, when the direction for controlling the speed of capstan motor 20 and the direction for controlling the tracking are different, correct tracking is difficult since the speed controller prevents capstan motor 20 from moving in the direction of reducing the tracking error.

Such a conventional device is disclosed in JP-A-2 098 856 which reflects the preamble of the appended independent claims.

A precise gain control for the degree of control for the above two directions is needed to solve the problem. Therefore, the gains of tracking controller 12 and capstan speed controller 14 should be controlled precisely. However, the design of a device which is additionally required for the gain control as well as the gain control itself is difficult. Even though the device has a gain control function, there still is a problem of compatibility between the two devices if the recording device and the reproduction device are different.

Partial deterioration of tracking may cause little problem in a VHS-VCR or in an 8mm VCR, since the track width is quite large (58μm for VHS, and 21μm for 8mm). However, there is a problem of lowering performance in the case of a digital VCR which requires a high density recording, because very high performance tracking is needed if the track width is below 10μm.

Preferred embodiments of the present invention aim to provide a method and device which can control tracking by using a variable capstan speed instruction wherein a degree of tracking control calculated from a tracking error is reflected, instead of using a conventional capstan speed instruction wherein the tracking error is not reflected as a reference value which is used for calculating the degree of capstan motor speed control.

According to one aspect of the present invention, there is provided a tracking control method for an image recorder and/or reproducer, characterised by the steps of:

    calculating a degree of tracking control, by performing a predetermined gain control on said tracking error, and converting it into said degree of tracking control;

    generating a variable capstan speed instruction in which said degree of tracking control is reflected;

    determining a speed error, by comparing said capstan speed instruction and an actual rotation speed of the capstan motor, thereby to determine a degree of speed error of the capstan motor; and

    calculating a degree of speed control, by performing a predetermined gain control on said speed error, and calculating therefrom said degree of speed control of the capstan motor in which said tracking error is reflected.

Preferably, said variable capstan speed instruction of said speed instruction generation step is obtained by adding said degree of tracking control to a capstan speed instruction that is required when tracking error is not considered.

A head switching pulse having a predetermined frequency may be used as a reference signal, and said tracking error expressed by a phase difference resulting from a comparison between the phases of said reference signal and of a control pulse on a recording medium.

Said tracking error may be expressed by a frequency difference of a pilot signal which has four different frequencies.

According to another aspect of the present invention, there is provided a tracking control apparatus for generating a degree of capstan speed control for a capstan motor controlling the running of a recording medium, said apparatus characterised by :

    a tracking controller which outputs a variable capstan speed instruction from a degree of tracking control calculated by performing a predetermined gain control on a tracking error; and

    a capstan speed controller which performs a predetermined gain control on a speed error of the capstan motor calculated by comparing an actual capstan speed with a reference value derived from said capstan speed instruction, and outputs said degree of capstan speed control.

Said tracking controller and capstan speed controller may be included in a micro-computer which controls functions of said image recorder and/or reproducer.

Said tracking controller may comprise:

    a tracking controller which performs a predetermined calculation on said tracking error for a gain control operation and outputs said degree of tracking control; and

    a capstan speed instruction generator which outputs said variable capstan speed instruction that corresponds to said degree of tracking control.

Said calculation by said tracking controller may comprise a proportional-integration-differentiation (PID) control.

Preferably, said capstan speed instruction generator is a voltage control oscillator which outputs a variable frequency signal that corresponds to said degree of tracking control.

Preferably, said capstan speed controller comprises:

a capstan speed error detector which compares said capstan speed instruction with the actual speed of the capstan motor, and then detects said capstan speed error; and

a capstan speed controller which performs a predetermined calculation on said capstan speed error for gain control, and then outputs said degree of capstan speed control.

Preferably, said calculation by said capstan speed controller comprises a proportional-integration-differentiation (PID) control.

Preferably, the tracking control apparatus comprises:

a capstan motor which controls the running of a recording medium;

a capstan phase comparator which compares the phases of a head switching pulse of a pre-set frequency and a control pulse, and then outputs a degree of tracking error expressed by the phase difference;

a capstan phase controller which performs a predetermined calculation for gain control on said tracking error resulting from said capstan phase comparator, and then outputs a degree of tracking control;

a capstan speed instruction generator which generates a variable capstan speed instruction related to said degree of tracking control;

a capstan speed error detector which compares said capstan speed instruction and an actual capstan speed, and then generates a speed error of said capstan motor;

a capstan speed controller which performs a predetermined calculation on the speed error of said capstan motor for gain control, and then outputs a capstan speed control signal; and

a capstan motor driver which drives said capstan motor according to the output of said capstan speed controller.

Preferably, said calculation by said capstan phase controller comprises a proportional-integration-differentiation (PID) control.

Preferably, said capstan speed instruction generator comprises a voltage-controlled oscillator which outputs a variable frequency signal corresponding to said degree of tracking control.

Preferably, said calculation by said capstan speed controller comprises a proportional-integration-differentiation (PID) control.

According to a preferred embodiment of the present invention, there is provided a tracking control apparatus for an 8mm image processing apparatus which comprises a capstan motor that controls the running of a recording medium and a capstan driver, said apparatus comprising:

a detector which detects a pilot signal for discriminating tracks;

an auto track finding (ATF) controller which outputs an ATF signal according to a frequency difference of said detected pilot signal, to represent a degree of tracking error; and

a micro-computer which generates a variable capstan speed instruction from a degree of tracking control obtained by performing a predetermined gain control calculation on said tracking error, performs a predetermined gain control on a capstan motor's speed error obtained by comparing an actual capstan speed with a capstan speed instruction which serves as a reference value, and then outputs a capstan speed control signal to said capstan motor driver.

Preferred embodiments of the present invention may be based on a basic principle of tracking control as in a conventional method. As compared with the conventional method wherein the degree of capstan speed control is separately calculated from the degree of tracking control, the degree of capstan speed control is preferred embodiments of the present invention has a dependant relationship with the degree of tracking error (or the degree of tracking control) since the degree of capstan speed control is reflected by the degree of tracking error (or the amount of tracking control).

For a better understanding of the invention, and to show how embodiments of the same may be carried into effect, reference will now be made, by way of example, to Figures 5 to 8 of the accompanying diagrammatic drawings, in which:

Figure 5 is a block diagram showing the structure of one example of a tracking control apparatus of a VCR according to the present invention;

Figure 6 is a block diagram showing in more detail one example of an embodiment of a tracking control apparatus of a VCR according to the present invention;

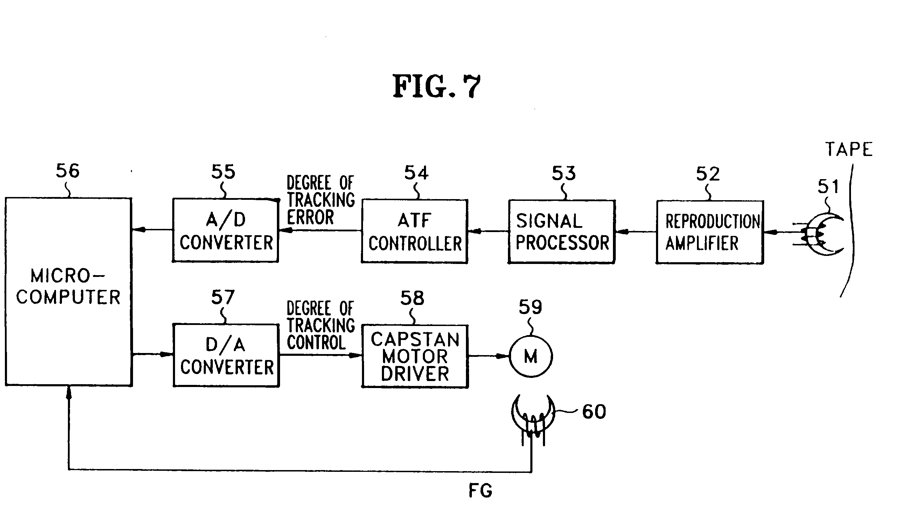

Figure 7 is a block diagram showing another embodiment of a tracking control apparatus of a VCR according to the present invention; and

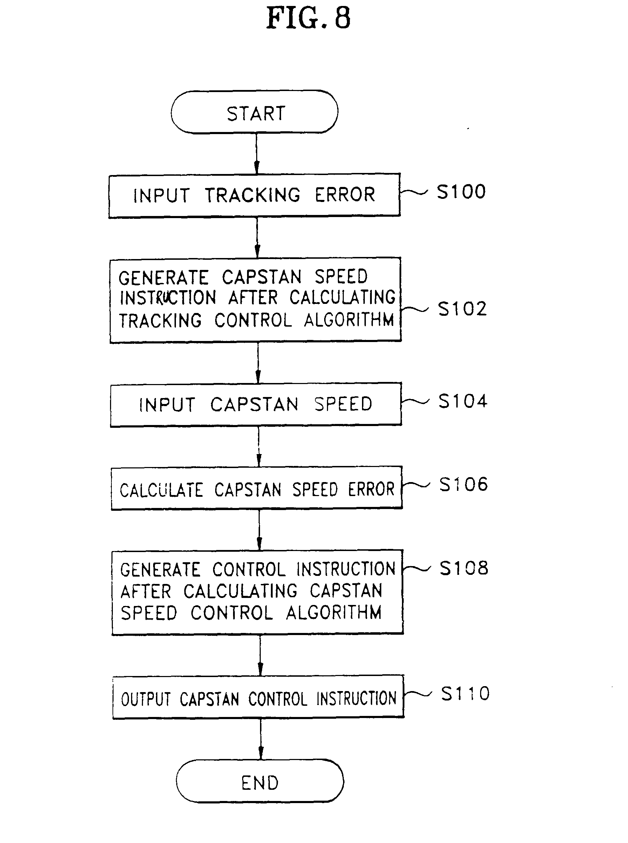

Figure 8 is a flowchart showing one example of a procedure of a tracking control method of a VCR according to the present invention.

First, a process of calculating a degree of tracking control will be explained.

The process of calculating the degree of tracking control is one in which the tracking error is multiplied by a predetermined gain or is differentiated or integrated, thereby determining the degree of tracking control. That is, a proportional-integration-differentiation (PID) control is accomplished.

Here, the physical dimension expressing the degree of tracking error is variable. That is, the physical dimension varies depending on the characteristic of a calculating apparatus which calculates the degree of tracking control from the degree of tracking error. For example, the tracking error may be represented by a phase difference when the tracking error is calculated by comparing a reference signal with the phases of control pulses on tape which is read via a head, assuming that head switching pulses of predetermined frequency are provided as the reference signal. When a pilot signal in which four different frequencies are provided is used, frequency difference may represent the tracking error.

The following is a process of generating speed instruction.

This process is for obtaining a capstan speed instruction, i.e. a reference value which is needed for calculating a speed error of a capstan motor, and particularly, for obtaining a capstan speed instruction in which the degree of tracking control is reflected.

The method for obtaining the capstan speed instruction wherein the degree of tracking control is reflected can be variable. One possible method is to add to the degree of tracking control, obtained from a gain control performed on the tracking error, the capstan speed instruction needed when the tracking error is not considered, and the result is then used as a capstan speed instruction in the process of generating a speed instruction.

Here, the degree of tracking error is not a constant value, and the capstan speed instruction is a variable value.

Also, the process of calculating the amount of tracking control should be prior to the process of generating the speed instruction wherein the capstan speed instruction is generated.

Referring now to Figure 5, which is a block diagram of tracking control device of a VCR according to one example of the present invention, reference numerals 30, 32, 34 and 36 denote a tracking controller, a capstan motor speed controller, a capstan motor driver and a capstan motor, respectively. Here, tracking controller 30 is directly used for the processes of calculating the degree of tracking control and generating a speed instruction.

Referring to Figure 5, the capstan speed instruction obtained from tracking controller 30 is used as a comparative reference value in estimating the speed error of the capstan motor, as described above, like the capstan speed instruction obtained from the conventional tracking controller 12 of Figure 2. However, the process of estimating the capstan speed instruction is different from the conventional method in that, in Figure 5, there is a close relation with the degree of tracking error. That is, the capstan speed instruction of Figure 5 is obtained under the assumption that the degree of tracking control is calculated.

Meanwhile, the capstan speed instruction obtained from tracking controller 30 is a variable value which includes the degree of tracking control according to the tracking error and varies as follows. That is, when the head is prior to the track that is to be scanned (e.g. when the head is located in a P1-level track in Figure 1), that is, when the tape speed has to be reduced, the value of capstan speed instruction obtained from the above process of generating a speed instruction changes to the direction wherein the speed of the capstan motor is decreased. On the contrary, when the head is behind the track that is to be scanned (e.g. when the head is located in P2-level track in Figure 1), that is, when the tape should run faster, the capstan speed instruction value changes to the direction wherein the capstan motor speed is increased.

Here, the physical dimension expressing the amount of tracking control and the capstan control instruction is variable. That is, the two physical amounts can be expressed in various forms depending on the apparatus carrying out the process. For example, the spinning (rotation) speed of capstan motor is generally expressed as a pulse frequency output from a frequency generator (FG). Therefore, it is convenient that the degree of the capstan speed instruction is to be related to the pulse frequency.

The following is a description of a process of determining speed error.

The degree of speed error of the capstan motor which is obtained in the process of determining the speed error is calculated by comparing the capstan speed instruction and the actual spinning speed of the capstan motor. That is, the difference between the reference value and the size of the actual spinning speed is the very amount of speed error of the capstan motor, assuming that the capstan speed instruction is a reference value.

Accordingly, the degree of speed error calculated in the process for determining the speed error is the degree of error caused by reasons other than the tracking error, and a conventional process which adds the degree of speed error to the degree of tracking control is unnecessary.

The following is a description of a process of calculating a degree of speed control.

The process of calculating the degree of speed control is for calculating the degree of speed control of the capstan motor needed for reflecting the degree of error obtained from the previous process, i.e. the process of determining the speed error, from the spinning speed of capstan motor most stably, promptly and correctly. The degree of speed control is utilized as a driving signal of the capstan motor by the driving means of the capstan motor.

Capstan speed controller 32 of Figure 5 is the means for determining the speed error and calculating the degree of speed control.

Figure 6 is a block diagram showing an embodiment of apparatus used for performing a method of the present invention, as applied to a VHS-VCR.

Referring to Figure 6, reference numeral 41 denotes a capstan phase comparator, 42 denotes a capstan phase controller, 43 denotes a capstan speed instruction generator, 44 denotes a capstan speed error detector, 45 denotes a capstan speed controller, 46 denotes a capstan motor driver, 47 denotes a capstan motor, 48 denotes a fixed head, and 49 denotes a frequency oscillator.

Capstan phase comparator 41 compares the phases of a head switching pulse of a predetermined frequency and of a control pulse which is reproduced by fixed head 48, and then calculates the tracking error.

Capstan phase controller 42 multiplies the tracking error by a predetermined gain coefficient or performs a differentiation or integration on the tracking error, which then is output as a value corresponding to a degree of tracking control. Capstan speed instruction generator 43 outputs a variable capstan speed instruction which is related to the frequency of the pulse representing the degree of tracking control.

Here, capstan phase controller 42 and capstan speed instruction generator 43 correspond to tracking controller 30 of Figure 5.

When the degree of tracking control output from capstan phase controller 42 is a voltage signal whose magnitude corresponds to the tracking error, capstan speed instruction generator 43 can be constructed using a voltage-controlled oscillator (VCO) which outputs a frequency signal that corresponds to the degree of tracking control, i.e. a voltage.

Meanwhile, capstan speed error detector 44 compares the capstan speed actually measured from frequency oscillator 49 and the capstan speed instruction, i.e, a reference value, provided by capstan speed instruction generator 43, and then calculates the speed error of the capstan motor. Capstan speed controller 45 multiplies the speed error of the capstan motor by a regular gain coefficient or performs a predetermined gain control, for example, a differentiation or an integration, on the speed error of capstan motor, and outputs a capstan speed control signal.

Here, capstan speed error detector 44 and capstan speed controller 45 correspond to the capstan speed controller 32 of Figure 5.

Tracking controller 30 and capstan speed controller 32 may use hardware for performing their functions; they also may use a micro-computer provided with software which can perform the functions of the hardware.

Figure 7 is a block diagram showing another embodiment of tracking control apparatus according to the present invention, that is, an embodiment applying to an 8mm VCR.

Referring to Figure 7, reference numeral 51 denotes a reproduction head, 52 denotes a reproduction amplifier, 53 denotes a signal processing part, 54 denotes an ATF controller, 55 denotes an A/D converter, 56 denotes a micro-computer, 57 denotes a D/A converter, 58 denotes a capstan motor driver, 59 denotes a capstan motor, and 60 denotes a frequency oscillator.

Reproduction amplifier 52 picks up a signal recorded on a tape from reproduction head 51 and then amplifies the picked-up signal.

The frequency bands of the signals recorded on 8mm video tape can be described as follows. Four kinds of pilot signals (f1-f4) are recorded in a 100KHz to 160KHz band, an FM audio (AFM) signal is recorded in a 1.4MHz to 1.6MHz band, and a colour signal which is AM-modulated onto a centre frequency of 743KHz, and a luminance signal of 4.2MHz to 5.4MHz are also recorded.

Signal processor 53 detects an image signal, audio signal and a pilot signal for discriminating the tracks which are recorded so as to have a specific band as described above, and then processes the signals.

ATF controller 54 detects the degree of ATF error among the signals output from signal processor 53 using the pilot signals, and converts the degree of ATF error in A/D converter 55 into the form of a digital signal, and then outputs the converted signal to micro-computer 56.

Among the specific frequencies of the four pilot signals, f1 is 102.544KHz, f2 is 118.951KHz, f3 is 165.21KHz and f4 is 148.689KHz.

The difference of the pilot output level is checked and used as a tracking error signal. That is, the following expression obtain the tracking error signal, and the degree of deviation of the head from the track can be discriminated, depending on the spectral components.

$$|f1 - f2| \fallingdotseq |f3 - f4| \fallingdotseq \Delta fA \fallingdotseq fH$$

$$|f1 - f4| \fallingdotseq |f2 - f3| \fallingdotseq \Delta fB \fallingdotseq 3fH$$

Micro-computer 56 performs a predetermined gain control on the amount of ATF error (tracking error) thereby calculating the degree of tracking control Δf. Micro-computer 56 then adds or subtracts this degree of tracking control to or from the capstan speed instruction, i.e. a fixed capstan instruction value f, wherein the tracking is not considered, thereby providing a speed instruction f±Δf for the capstan motor 59.

As a result, the variable capstan speed instruction f±Δf is formed, which then is converted into an analog signal in D/A converter 57. Then, capstan motor driver 58 controls the actual speed of capstan motor 59 so as to accord with the speed instruction.

The capstan motor of an 8mm VCR is controlled to be rotated at a regular speed. Therefore, the degree of tracking control is added to the degree of speed control, thereby driving the capstan motor entirely.

Figure 8 is a flowchart showing the procedure of one example of a method of the present invention, wherein the process for calculating the degree of speed control of capstan motor required when micro-computer 56 is used for tracking control is illustrated.

After step S100 wherein the tracking error is read from the micro-computer, the necessary degree of tracking control is determined by performing a proportional-integration-differentiation control algorithm, on the above tracking error. Then, step S102 adds the degree of tracking control to the capstan speed instruction required for rotating the capstan motor at the speed required when there is no tracking error, and generates a new capstan speed instruction.

Then, the actual rotation speed of capstan motor is input in step S104, and the degree of speed error is obtained in step S106 by calculating the difference between the actual rotation speed and the capstan speed instruction generated from step S102 (for example, the difference of pulse clock frequency). Then, the capstan speed control signal is obtained in step S108 by performing a proportional-integration-differentiation (PID) control algorithm process on the above degree of speed error. Then, the capstan speed control signal is output to capstan motor driver in step S110. Steps S100 to S110 repeat as a process cycle.

The above-described embodiments of the present invention have good compatibility of tracking even when the devices for recording and reproducing are different. Also, when the track is largely curved, that is, when the track linearity is poor, correct tracking is possible. Additionally, coefficient control and design for the system are made easy since the control signal is processed in one direction.

## Claims

1. A tracking control method for an image recorder and/or reproducer, said method comprising the steps of:

   determining (41) a tracking error;

   determining (44) a speed error; and

   calculating a degree of speed control of a capstan motor using said tracking error and said speed error;

   characterised by the steps of:

   calculating (42) a degree of tracking control, by performing a predetermined gain control on said tracking error, and converting it into said degree of tracking control;

   generating (43) a variable capstan speed instruction in which said degree of tracking control is reflected;

   in said step of determining (44) a speed error, comparing said capstan speed instruction and an actual rotation speed (FG) of the capstan motor (47), thereby to determine a degree of speed error of the capstan motor; and

   calculating (45) a degree of speed control, by performing a predetermined gain control on said speed error, and calculating therefrom said degree of speed control of the capstan motor (47) in which said tracking error is reflected.

2. A tracking control method according to claim 1, wherein said variable capstan speed instruction of said speed instruction generation (43) step is obtained by adding said degree of tracking control to a capstan speed instruction that is required when tracking error is not considered.

3. A tracking control method according to claim 1 or 2, wherein a head switching pulse having a predetermined frequency is used as a reference signal, and said tracking error is expressed by a phase difference resulting from a comparison (41) between the phases of said reference signal and of a control pulse on a recording medium.

4. A tracking control method according to claim 1 or 2, wherein said tracking error is expressed by a frequency difference of a pilot signal which has four different frequencies.

5. A tracking control apparatus for generating a degree of capstan speed control for a capstan motor (47) controlling the running of a recording medium, said apparatus characterised by :

a tracking controller (30) which outputs a variable capstan speed instruction from a degree of tracking control calculated by performing a predetermined gain control on a tracking error; and

a capstan speed controller (32) which performs a predetermined gain control on a speed error of the capstan motor calculated by comparing an actual capstan speed with a reference value derived from said capstan speed instruction, and outputs said degree of capstan speed control.

6. A tracking control apparatus according to claim 5, wherein said tracking controller (30) and capstan speed controller (32) are included in a micro-computer (56) which controls functions of said image recorder and/or reproducer.

7. A tracking control apparatus according to claim 5, wherein said tracking controller (30) comprises:

a tracking controller (42) which performs a predetermined calculation on said tracking error for a gain control operation and outputs said degree of tracking control; and

a capstan speed instruction generator (43) which outputs said variable capstan speed instruction that corresponds to said degree of tracking control.

8. A tracking control apparatus according to claim 7, wherein said calculation by said tracking controller (42) comprises a proportional-integration-differentiation (PID) control.

9. A tracking control apparatus according to claim 7 or 8, wherein said capstan speed instruction generator (43) is a voltage control oscillator which outputs a variable frequency signal that corresponds to said degree of tracking control.

10. A tracking control apparatus according to any of claims 5 to 9, wherein said capstan speed controller (32) comprises:

a capstan speed error detector (44) which compares said capstan speed instruction with the actual speed of the capstan motor, and then detects said capstan speed error; and

a capstan speed controller (45) which performs a predetermined calculation on said capstan speed error for gain control, and then outputs said degree of capstan speed control.

11. A tracking control apparatus according to claim 10, wherein said calculation by said capstan speed controller (45) comprises a proportional-integration-differentiation (PID) control.

12. A tracking control apparatus as claimed in claim 5, comprising:

a capstan motor (47) which controls the running of the recording medium;

a capstan phase comparator (41) which compares the phases of a head switching pulse of a pre-set frequency and a control pulse, and then outputs a degree of tracking error expressed by the phase difference;

a capstan phase controller (42) which performs a predetermined calculation for gain control on said tracking error resulting from said capstan phase comparator, and then outputs a degree of tracking control;

a capstan speed instruction generator (43) which generates a variable capstan speed instruction related to said degree of tracking control, said capstan phase controller (42) and said capstan speed instruction generator (43) together forming said tracking controller (30);

a capstan speed error detector (44) which compares said capstan speed instruction and an actual capstan speed, and then generates a speed error of said capstan motor;

a capstan speed controller (45) which performs a predetermined calculation on the speed error of said capstan motor for gain control, and then outputs a capstan speed control signal, said capstan speed error detector (44) and said capstan speed controller (45) together forming said capstan speed controller (32); and

a capstan motor driver (46) which drives said capstan motor (47) according to the output of said capstan speed controller (45).

13. A tracking control apparatus according to claim 12, wherein said calculation by said capstan phase controller (42) and/or said capstan speed controller (45) comprises a proportional-integration-differentiation (PID) control.

14. A tracking control apparatus according to claim 12 or 13, wherein said capstan speed instruction generator (43) comprises a voltage-controlled oscillator which outputs a variable frequency signal corresponding to said degree of tracking control.

15. A tracking control apparatus according to any of claim 5 to 14 used in an image recorder and/or reproducer.

16. A tracking control apparatus as claimed in claim 5, for an 8mm image processing apparatus which comprises a capstan motor (59) that controls the running of a recording medium and a capstan driver (58), said apparatus comprising:

a detector (53) which detects a pilot signal for discriminating tracks;

an auto track finding (ATF) controller (54) which outputs an ATF signal according to a frequency difference of said detected pilot signal, to represent a degree of tracking error; and

said tracking controller (30) and said capstan speed controller (32) together being a microcomputer (56) which generates said variable capstan speed instruction from said degree of tracking control obtained by performing a predetermined gain control calculation on said tracking error, performs a predetermined gain control on said capstan motor speed error obtained by comparing an actual capstan speed with said capstan speed instruction which serves as a reference value, and then outputs a capstan speed control signal to said capstan motor driver (58).

**Patentansprüche**

1. Ein Spurnachführungssteuerungsverfahren für ein Bildaufzeichnungs-und/oder -wiedergabegerät, wobei das genannte Verfahren die Schritte umfaßt:

Bestimmen (41) eines Spurnachführungsfehlers;

Bestimmen (44) eines Drehzahlfehlers;

Berechnen einer Größe der Drehzahlsteuerung eines Capstanmotors unter Verwendung des genannten Spurnachführungsfehlers und des genannten Drehzahlfehlers;

**gekennzeichnet durch** die Schritte:

Berechnen (42) einer Größe einer Spurnachführungssteuerung, indem eine vorbestimmte Verstärkungssteuerung an dem genannten Spurnachführungsfehler ausgeführt wird, und ihre Umwandlung in die genannte Größe der Spurnachführungssteuerung;

Erzeugen (43) eines veränderbaren Capstandrehzahlbefehls, durch den die genannte Größe der Spurnachführungssteuerung wiedergegeben wird;

Vergleichen des genannten Capstandrehzahlbefehls und einer tatsächlichen Drehzahl (FG) des Capstanmotors (47) in dem genannten Bestimmungsschritt (44), um dadurch eine Größe des Drehzahlfehlers des Capstanmotors zu bestimmen; und

Berechnen (45) einer Größe der Drehzahlsteuerung, indem eine vorbestimmte Verstärkungssteuerung an dem genannten Drehzahlfehler ausgeführt wird, und daraus die genannte Größe der Drehzahlsteuerung des Capstanmotors (47) berechnen, durch die der genannte Spurnachführungsfehler wiedergegeben wird.

2. Ein Verfahren zur Spurnachführungssteuerung gemäß Anspruch 1, wobei der genannte veränderbare Capstandrehzahlbefehl des Schritts der Drehzahlbefehlserzeugung (43) erhalten wird, indem die genannte Größe der Spurnachführungssteuerung zu einem Capstandrehzahlbefehl addiert wird, der verlangt wird, wenn ein Spurnachführungsfehler nicht betrachtet wird.

3. Ein Verfahren zur Spurnachführungssteuerung gemäß Anspruch 1 oder 2, wobei ein Kopfschaltimpuls mit einer vorbestimmten Frequenz als ein Bezugssignal verwendet wird, und der genannte Spurnachführungsfehler durch eine Phasendifferenz ausgedrückt wird, die sich aus einem Vergleich (41) zwischen den Phasen des genannten Bezugssignals und einem Steuerimpuls auf einem Aufzeichnungsmedium ergibt.

4. Ein Verfahren zur Spurnachführungssteuerung gemäß Anspruch 1 oder 2, wobei der genannte Spurnachführungsfehler durch eine Frequenzdifferenz eines Steuersignals ausgedrückt wird, das vier unterschiedliche Frequenzen aufweist.

5. Eine Vorrichtung zur Spurnachführungssteuerung zur Erzeugung einer Größe einer Capstandrehzahlsteuerung für einen Capstanmotor (47), der den Lauf eines Aufzeichnungsmediums steuert, wobei die Vorrichtung **gekennzeichnet** ist durch:

eine Spurnachführungssteuerung (30), die einen veränderbaren Capstandrehzahlbefehl von einer Größe der Spurnachführungssteuerung ausgibt, die durch Ausführung einer vorbestimmten Verstärkungssteuerung bei einem Spurnachführungsfehler berechnet wird; und

eine Capstandrehzahlsteuerung (32), die eine vorbestimmte Verstärkungssteuerung an einem Drehzahlfehler des Capstanmotors ausführt, die durch Vergleichen einer tatsächlichen Capstandrehzahl mit einem Bezugswert berechnet wird, der von dem genannten Capstandrehzahlbefehl abgeleitet wird, und die genannte Größe der Capstandrehzahlsteuerung ausgibt.

6. Eine Vorrichtung zur Spurnachführungssteuerung gemäß Anspruch 5, wobei die genannte Spurnachführungssteuerung (30) und eine Capstandrehzahlsteuerung (32) in einem Mikrocomputer enthalten sind, der Funktionen des genannten Bildaufzeichnungs- und -wiedergabegeräts steuert.

7. Eine Vorrichtung zur Spurnachführungssteuerung gemäß Anspruch 5, wobei die genannte Spurnachführungssteuerung (30) umfaßt:

eine Spurnachführungssteuerung (42), die eine vorbestimmte Berechnung an dem genannten Spurnachführungsfehler für eine Verstärkungssteueroperation ausführt und die genannte Größe der Spurnachführungssteuerung ausgibt; und

einen Capstandrehzahlbefehlsgenerator (43), der den genannten veränderbaren Capstandrehzahlbefehl ausgibt, der der genannten Größe der Spurnachführungssteuerung entspricht.

8. Eine Vorrichtung zur Spurnachführungssteuerung gemäß Anspruch 7, wobei die genannte Berechnung durch die genannte Spurnachführungssteuerung (42) eine Proportional-Integral-Differenzier (PID)-Steuerung umfaßt.

9. Eine Vorrichtung zur Spumachführungssteuerung gemäß Anspruch 7 oder 8, wobei der genannte Capstandrehzahlbefehlsgenerator (43) ein spannungsgesteuerter Oszillator ist, der ein veränderbares Frequenzsignal ausgibt, das der genannten Größe der Spurnachführungssteuerung entspricht.

10. Eine Vorrichtung zur Spurnachführungssteuerung gemäß irgendeinem der Ansprüche 5 bis 9, wobei die genannte Capstandrehzahlsteuerung (32) umfaßt:

eine Capstandrehzahlfehlererfassungseinhchtung (44), die den genannten Capstandrehzahlbefehl mit der tatsächlichen Drehzahl des Capstanmotors vergleicht und dann den genannten Capstandrehzahlfehler bestimmt; und

eine Capstandrehzahlsteuerung (45), die eine vorbestimmte Berechnung an dem genannten Capstandrehzahlfehler zur Verstärkungssteuerung ausführt und dann die genannte Capstandrehzahlsteuerungsgröße ausgibt.

11. Eine Vorrichtung zur Spurnachführungssteuerung gemäß Anspruch 10, wobei die genannte Berechnung durch die genannte Spurnachführungssteuerung (42) eine Proportional-Integral-Differenzierungs(PID)-Steuerung umfaßt.

12. Eine Vorrichtung zur Spurnachführungssteuerung, wie in Anspruch 5 beansprucht, die umfaßt:

einen Capstanmotor (47), der den Lauf des Aufzeichnungsmediums steuert;

einen Capstanphasenvergleicher (41), der die Phasen eines Kopfschaltimpulses einer voreingestellten Frequenz und eines Steuenmpulses vergleicht und dann eine Größe des Spurnachführungsfehlers ausgibt, der durch die Phasendifferenz ausgedruckt ist;

eine Capstanphasensteuerung (42), die eine vorbestimmte Berechnung zur Verstärkungssteuerung bei dem genannten Spurnachführungsfehler ausführt, der sich von dem genannten Capstanphasenvergleicher ergibt, und dann eine Größe der Spurverfolgungssteuerung ausgibt;

einen Capstandrehzahlbefehlsgenerator (43), der einen veränderbaren Capstandrehzahlbefehl ausgibt, der zu der genannten Größe der Spurverfolgungssteuerung in Beziehung steht, wobei die genannte Capstanphasensteuerung (42) und der genannte Capstandrehzahlbefehlsgenerator (43) zusammen die genannte Spurnachführungssteuerung (30) bilden;

eine Capstandrehzahlfehlererfassungseinhchtung (44), die den genannten Capstandrehzahlbefehl und eine tatsächliche Capstandrehzahl vergleicht, und dann einen Drehzahlfehler des genannten Capstanmotors ausgibt;

eine Capstandrehzahlsteuerung (45), die eine vorbestimmte Berechnung an dem genannten Drehzahlfehler des genannten Capstanmotors zur Verstärkungssteuerung ausführt und dann ein Capstandrehzahlsteuersignal ausgibt, wobei die genannte Capstandrehzahlfehlererfassungseinhchtung (44) und die genannte Capstandrehzahlsteuerung (45) zusammen die genannte Capstandrehzahlsteuerung (32) bilden; und

einen Capstanmotortreiber (46), der den genannten Capstanmotor (47) gemäß dem Ausgang der genannten Capstandrehzahlsteuerung (45) ansteuert.

13. Eine Vorrichtung zur Spurnachführungssteuerung gemäß Anspruch 12, wobei die genannte Berechnung durch die genannte Capstanphasensteuerung (42) und/oder die genannte Capstandrehzahlsteuerung (45) eine Proportional/Integral-Differenzier(PID)-Steuerung umfaßt.

14. Eine Vorrichtung zur Spurnachführungssteuerung gemäß Anspruch 12 oder 13, wobei der genannte Capstandrehzahlbefehlsgenerator (43) einen spannungsgesteuerten Oszillator umfaßt, der ein veränderbares Frequenzsignal entsprechend der genannten Größe der Spurnachführungssteuerung ausgibt.

15. Eine Vorrichtung zur Spurnachführungssteuerung gemäß irgendeinem der Ansprüche 5 bis 14, die in einem Bildaufzeichnungs- und/oder - wiedergabegerät verwendet wird.

16. Eine Vorrichtung zur Spurnachführungssteuerung, wie in Anspruch 5 beansprucht, für eine 8 mm Bildverarbeitungsvorhchtung, die einen Capstanmotor (59) umfaßt, der den Lauf eines Aufzeichnungsmediums steuert, sowie einen Capstantreiber (58), wobei die genannte Vorrichtung umfaßt:

eine Erfassungseinrichtung (53), die ein Steuersignal zur Spurenunterscheidung erfaßt;

eine automatische Spurauffindungssteuerung (ATF) (54), die ein ATF Signal gemäß einer Frequenzdifferenz des genannten erfaßten Steuersignals ausgibt, um eine Größe des Spurnachführungsfehlers darzustellen; und

die genannte Spurnachführungssteuerung (30) und die genannte Capstandrehzahlsteuerung (32) zusammen ein Mikrocomputer (56) sind, der den genannten veränderbaren Capstandrehzahlbefehl aus der genannten Größe der Spurnachführungssteuerung erzeugt, die durch Ausführung einer vorbestimmten Verstärkungssteuerberechnung an dem genannten Spurnachführungsfehler erhalten wird, eine vorbestimmte Verstärkungssteuerung an dem genannten Capstanmotor-Drehzahlfehler ausführt, der durch Vergleichen einer tatsächlichen Capstandrehzahl mit dem genannten Capstandrehzahlbefehl erhalten wird und als ein Bezugswert dient, und dann ein Capstandrehzahlsteuersignal an den genannten Capstanmotortreiber (58) ausgibt.

## Revendications

1. Procédé de commande de suivi de piste pour enregistreur et/ou lecteur d'images, ledit procédé comportant les étapes de:

détermination (41) d'une erreur de suivi de piste;
détermination (44) d'une erreur de vitesse; et calcul d'un degré de commande de vitesse d'un moteur de cabestan utilisant ladite erreur de suivi de piste et ladite erreur de vitesse;

caractérisé par les étapes de:

calcul (42) d'un degré de commande de suivi de piste, en effectuant une commande de gain prédéterminée sur ladite erreur de suivi de piste et en la convertissant en dit degré de commande de suivi de piste;
génération (43) d'une instruction de vitesse de cabestan variable qui reflète ledit degré de commande de suivi de piste;
dans ladite étape de détermination (44) d'une erreur de vitesse, la comparaison de ladite instruction de vitesse de cabestan à une vitesse de rotation effective (FG) du moteur de cabestan (47), pour déterminer ainsi un degré d'erreur de vitesse du moteur de cabestan; et
calcul (45) d'un degré de commande de vitesse, en effectuant une commande de gain prédéterminée sur ladite erreur de vitesse et en calculant à partir de là ledit degré de commande de vitesse du moteur de cabestan (47) qui reflète ladite erreur de suivi de piste.

2. Procédé de commande de suivi de piste selon la revendication 1, dans lequel on obtient ladite instruction de vitesse de cabestan variable de ladite étape de génération d'instruction de vitesse (43) en ajoutant ledit degré de commande de suivi de piste à une instruction de vitesse de cabestan nécessaire quand l'erreur de suivi de piste n'est pas prise en considération.

3. Procédé de commande de suivi de piste selon la revendication 1 ou 2, dans lequel on utilise une impulsion de commutation de tête de fréquence prédéterminée comme signal de référence et ladite erreur de suivi de piste s'exprime par une différence de phase qui résulte d'une comparaison (41) entre les phases dudit signal de référence et d'une impulsion de commande présente sur un support d'enregistrement.

4. Procédé de commande de suivi de piste selon la revendication 1 ou 2, dans lequel ladite erreur de suivi de piste s'exprime par une différence de fréquence d'un signal pilote qui a quatre fréquences différentes.

5. Appareil de commande de suivi de piste pour générer un degré de commande de vitesse de cabestan pour un moteur de cabestan (47) qui commande l'avance d'un support d'enregistrement, ledit appareil étant caractérisé par:

   un dispositif de commande de suivi de piste (30) qui génère une instruction de vitesse de cabestan variable à partir d'un degré de commande de suivi de piste calculé en effectuant une commande de gain prédéterminée sur une erreur de suivi de piste; et
   un dispositif de commande de vitesse de cabestan (32) qui effectue une commande de gain prédéterminée sur une erreur de vitesse du moteur de cabestan calculée en comparant une vitesse de cabestan effective à une valeur de référence dérivée de ladite instruction de vitesse de cabestan et qui génère ledit degré de commande de vitesse de cabestan.

6. Appareil de commande de suivi de piste selon la revendication 5, dans lequel ledit dispositif de commande de suivi de piste (30) et ledit dispositif de commande de vitesse de cabestan (32) sont incorporés à un micro-ordinateur (56) qui commande les fonctions dudit enregistreur et/ou lecteur d'images.

7. Appareil de commande de suivi de piste selon la revendication 5, dans lequel ledit dispositif de commande de suivi de piste (30) comporte:

   un dispositif de commande de suivi de piste (42) qui effectue un calcul prédéterminé sur ladite erreur de suivi de piste en vue d'une opération de commande de gain et génère ledit degré de commande de suivi de piste; et
   un générateur d'instruction de vitesse de cabestan (43) qui génère ladite instruction de vitesse de cabestan variable qui correspond audit degré de commande de suivi de piste.

8. Appareil de commande de suivi de piste selon la revendication 7, dans lequel ledit calcul effectué par ledit dispositif de commande de suivi de piste (42) comporte une commande par action proportionnelle, intégrale et dérivée (PID).

9. Appareil de commande de suivi de piste selon la revendication 7 ou 8, dans lequel ledit générateur d'instruction de vitesse de cabestan (43) est un oscillateur commandé en tension qui génère un signal de fréquence variable qui correspond audit degré de commande de suivi de piste.

10. Appareil de commande de suivi de piste selon l'une quelconque des revendications 5 à 9, dans lequel ledit dispositif de commande de vitesse de cabestan (32) comporte:

   un détecteur d'erreur de vitesse de cabestan (44) qui compare ladite instruction de vitesse de cabestan à la vitesse effective du moteur de cabestan puis détecte ladite erreur de vitesse de cabestan; et
   un dispositif de commande de vitesse de cabestan (45) qui effectue un calcul prédéterminé sur ladite erreur de vitesse de cabestan en vue d'une commande de gain puis génère ledit degré de commande de vitesse de cabestan.

11. Appareil de commande de suivi de piste selon la revendication 10, dans lequel ledit calcul effectué par ledit dispositif de commande de vitesse de cabestan (45) comporte une commande par action proportionnelle, intégrale et dérivée (PID).

12. Appareil de commande de suivi de piste selon la revendication 5, qui comporte:

   un moteur de cabestan (47) qui commande l'avance du support d'enregistrement;
   un comparateur de phase de cabestan (41) qui compare les phases d'une impulsion de commutation de tête de fréquence prédéterminée et d'une impulsion de commande puis génère un degré d'erreur de suivi de piste qui s'exprime par la différence de phase;
   un dispositif de commande de phase de cabestan (42) qui effectue, en vue d'une commande de gain, un calcul prédéterminé sur ladite erreur de suivi de piste qui résulte de ladite comparaison de phase de cabestan puis génère un degré de commande de suivi de piste;
   un générateur d'instruction de vitesse de cabestan (43) qui génère une instruction de vitesse de cabestan variable liée audit degré de commande de suivi de piste, ledit dispositif de commande de phase de cabestan (42) et ledit générateur d'instruction de vitesse de cabestan (43) constituant ensemble ledit dispositif de commande de suivi de piste (30);
   un détecteur d'erreur de vitesse de cabestan (44) qui compare ladite instruction de vitesse de cabestan à une vitesse de cabestan effective puis génère une erreur de vitesse dudit moteur de cabestan;

un dispositif de commande de vitesse de cabestan (45) qui effectue un calcul prédéterminé sur l'erreur de vitesse dudit moteur de cabestan en vue d'une commande de gain puis génère un signal de commande de vitesse de cabestan, ledit détecteur d'erreur de vitesse de cabestan (44) et ledit dispositif de commande de vitesse de cabestan (45) constituant ensemble ledit dispositif de commande de vitesse de cabestan (32); et

un dispositif d'entraînement de moteur de cabestan (46) qui entraîne ledit moteur de cabestan (47) en fonction du signal de sortie dudit dispositif de commande de vitesse de cabestan (45).

13. Appareil de commande de suivi de piste selon la revendication 12, dans lequel ledit calcul effectué par ledit dispositif de commande de phase de cabestan (42) et/ou ledit dispositif de commande de vitesse de cabestan (45) comporte une commande par action proportionnelle, intégrale et dérivée (PID).

14. Appareil de commande de suivi de piste selon la revendication 12 ou 13, dans lequel ledit générateur d'instruction de vitesse de cabestan (43) comporte un oscillateur commandé en tension qui génère un signal de fréquence variable correspondant audit degré de commande de suivi de piste.

15. Appareil de commande de suivi de piste selon l'une quelconque des revendications 5 à 14 utilisé dans un enregistreur et/ou lecteur d'images.

16. Appareil de commande de suivi de piste selon la revendication 5, destiné à un appareil de traitement d'images 8 mm, qui comporte un moteur de cabestan (59) qui commande l'avance d'un support d'enregistrement et un dispositif d'entraînement de cabestan (58), ledit appareil comportant:

un détecteur (53) qui détecte un signal pilote pour identifier des pistes;

un dispositif de commande de recherche automatique de piste (ATF) (54) qui génère un signal ATF en fonction d'une différence de fréquence dudit signal pilote détecté, pour représenter un degré d'erreur de suivi de piste; et

ledit dispositif de commande de suivi de piste (30) et ledit dispositif de commande de vitesse de cabestan (32) constituant ensemble un micro-ordinateur (56) qui génère ladite instruction de vitesse de cabestan variable à partir dudit degré de commande de suivi de piste obtenu en effectuant une commande de gain prédéterminée sur ladite erreur de suivi de piste, effectue une commande de gain prédéterminée sur ladite erreur de vitesse de moteur de cabestan obtenue en comparant une vitesse de cabestan effective à ladite instruction de vitesse de cabestan qui sert de valeur de référence puis applique un signal de commande de vitesse de cabestan audit dispositif d'entraînement de moteur de cabestan (58).

# FIG. 1A

SCANNING TRACES OF HEAD

$P_2$

TAPE

$P_1$

TRACK

$P_0$

FIXED TRACK

TAPE PROCEEDING DIRECTION

# FIG. 1B

DEGREE OF
TRACKING ERROR

+

$P_0$   $P_1$   $P_2$

TRACK LENGTH

−

# FIG. 4

FIXED NORMAL TRACK

TAPE

A

B

MODIFIED TRACK

14

# FIG. 2

```
                    ┌─── 12
TRACKING        ┌──────────────┐
ERROR      ────→│   TRACKING   │
                │  CONTROLLER  │
                └──────────────┘
                                    │
                    ┌─── 14                        ┌─── 18              ┌─── 20
CAPSTAN         ┌──────────────┐              ┌──────────────┐    ┌──────────────┐
SPEED      ────→│   CAPSTAN    │        ⊕     │   CAPSTAN    │    │   CAPSTAN    │  ───→
INSTRUCTION     │    SPEED     │───────→(+)──→│    MOTOR     │───→│    MOTOR     │
                │  CONTROLLER  │              │    DRIVER    │    │              │
                └──────────────┘         │    └──────────────┘    └──────────────┘
                        ↑               16
                        │
                        └──────── ACTUAL CAPSTAN SPEED ──────────────────────┘
```

# FIG. 3

```
           FG ┌─────────────────────────────────────────────────────────────┐
              │                                                               │
              │       ┌─── 21      DEGREE OF    ┌─── 22                       │
              │    ┌──────────┐   CAPSTAN      ┌──────────┐                  29
CAPSTAN       │    │ CAPSTAN  │  SPEED ERROR   │ CAPSTAN  │ DEGREE OF CAPSTAN SPEED  ╱╱╱
SPEED      ───┼───→│SPEED ERROR│─────────────→│  SPEED   │──────────┐      ╱╱╱╱
INSTRUCTION(f)│    │ DETECTOR │                │CONTROLLER│          │          ┌─── 26        ┌─── 27
              │    └──────────┘                └──────────┘      ┌─── 25   ┌──────────┐
              │                                                  ⊕        │ CAPSTAN  │      ╱──╲
              │       ┌─── 23      DEGREE OF    ┌─── 24         (+)──────→│  MOTOR   │────→( M )
              │    ┌──────────┐   CAPSTAN      ┌──────────┐      │        │  DRIVER  │      ╲──╱
HEAD          │    │ CAPSTAN  │ TRACKING ERROR │ CAPSTAN  │      │        └──────────┘
SWITCHING  ──→│    │  PHASE   │───────────────→│  PHASE   │──────┘
PULSE         │    │COMPARATOR│                │CONTROLLER│  DEGREE OF CAPSTAN
              │    └──────────┘                └──────────┘  TRACKING CONTROL
              │                                                                    ┌─── 28
              │                                                                   ╱╱╱╱
              │                                    CTL PULSE                    ╱╱╱
              └───────────────────────────────────────────────────────────────┘
```

## FIG. 5

TRACKING ERROR → **30** TRACKING CONTROLLER → **32** CAPSTAN SPEED CONTROLLER → **34** CAPSTAN MOTOR DRIVER → **36** CAPSTAN MOTOR

ACTUAL CAPSTAN SPEED

## FIG. 6

HEAD SWITCHING PULSE → **41** CAPSTAN PHASE COMPARATOR

DEGREE OF TRACKING ERROR → **42** CAPSTAN PHASE CONTROLLER

DEGREE OF TRACKING CONTROL ($\Delta f$) → **43** CAPSTAN SPEED INSTRUCTION GENERATOR

**44** CAPSTAN SPEED ERROR DETECTOR → **45** CAPSTAN SPEED CONTROLLER

DEGREE OF CAPSTAN CONTROL → **46** CAPSTAN MOTOR DRIVER → **47** M

**49**  **48**

FG

CAPSTAN SPEED INSTRUCTION ($f + \Delta f$)

# FIG. 7

# FIG. 8

START

INPUT TRACKING ERROR — S100

GENERATE CAPSTAN SPEED INSTRUCTION AFTER CALCULATING TRACKING CONTROL ALGORITHM — S102

INPUT CAPSTAN SPEED — S104

CALCULATE CAPSTAN SPEED ERROR — S106

GENERATE CONTROL INSTRUCTION AFTER CALCULATING CAPSTAN SPEED CONTROL ALGORITHM — S108

OUTPUT CAPSTAN CONTROL INSTRUCTION — S110

END